# FASCICULE DE BREVET EUROPEEN

(11) **EP 1 145 249 B1**
(45) Date de publication et mention de la délivrance du brevet: **26.05.2010**
(21) Numéro de dépôt: 00900612.3
(22) Date de dépôt: 19.01.2000
(51) Int. Cl.: G21C 17/06

(54) **PROCEDE ET APPAREIL D'IDENTIFICATION DE COMBUSTIBLES NUCLEAIRES**
VERFAHREN UND VORRICHTUNG ZUR UNTERSCHEIDUNG VON KERNBRENNSTOFFEN
METHOD AND APPARATUS FOR IDENTIFYING NUCLEAR FUELS

(30) Priorité: 20.01.1999 FR 9900575
(43) Date de publication de la demande: 17.10.2001
(73) Titulaire: Commissariat à l'énergie atomique et aux énergies alternatives, 75015 Paris (FR); AREVA NC, 75009 Paris (FR)
(72) Inventeur: LEBRUN, Alain, F-13490 Jouques (FR); BIGNAN, Gilles, F-13650 Meyrargues (FR); VAUBAILLON, Sylvain, 92160 Antony (FR)
(74) Mandataire: Poulin, Gérard
(86) Numéro de dépôt international: PCT/FR2000/000108
(87) Numéro de publication internationale: WO 2000/044002

(56) Documents cités:
- EP-A- 0 280 925
- US-A- 3 728 544
- US-A- 4 291 227
- US-A- 4 510 117
- DATABASE WPI Section Ch, Week 8728 Derwent Publications Ltd., London, GB; Class K05, AN 87-197027 XP002116115 & SU 711 905 A (KAZARINOV N M), 30 octobre 1982 (1982-10-30)

## Description

L'invention ressortit à un procédé et à un appareil de discrimination de combustibles nucléaires d'après leur composition initiale, avant qu'elle n'ait été modifiée par la combustion.

Les combustibles nucléaires habituels contiennent de l'oxyde d'uranium comme élément fissile. Un autre combustible, comprenant un mélange d'oxyde d'uranium et d'oxyde de plutonium, voit cependant son utilisation se développer. On éprouve alors le besoin d'appareils permettant de reconnaître qu'un élément combustible de réacteur nucléaire contient du combustible de l'un ou de l'autre genre. On peut exploiter pour cela les différences entre les rayonnements que ces combustibles émettent, mais les difficultés à surmonter ne permettent à première vue pas d'établir un diagnostic sûr.

Le combustible ne contenant que de l'oxyde d'uranium n'émet pas de neutrons à l'état neuf ou non irradié, contrairement au combustible contenant de l'oxyde de plutonium. Il semble donc facile de faire la discrimination entre les deux genres de combustibles d'après ce critère, mais cela devient impossible avec des combustibles irradiés, qui émettent tous des neutrons. Le rayonnement gamma également émis par les combustibles nucléaires ne permet pas davantage de les discriminer puisque son intensité est identique pour les deux compositions de combustibles envisagées ici mais qu'elle aussi dépend fortement de l'irradiation du combustible, et même de la durée du refroidissement, quand le combustible a été extrait du réacteur pour être examiné.

Il existe un appareil pourvu de détecteurs de rayonnement gamma et neutronique, mais qui n'est pas destiné normalement à faire de la discrimination de combustibles. Les mesures de rayonnement sont indépendantes et servent à évaluer le taux d'irradiation ou de combustion du combustible pour vérifier qu'il n'est pas épuisé. C'est le rayonnement gamma total qu'on mesure pour exploiter sa décroissance avec le temps de refroidissement, en déduisant le taux de combustion de la forme de la fonction de décroissance.

Si la composition du combustible n'est pas connue avec précision, les auteurs de cet appareil antérieur proposent une méthode aux neutrons « actifs » à la place de la mesure du rayonnement neutronique émis par le combustible : cette méthode consiste à disposer une source de neutrons à côté du combustible et à mesurer le débit de neutrons qui traverse le combustible ; l'appareil est divisé en deux parties de part et d'autre du combustible, dont l'une porte la source de neutrons et l'autre le détecteur. L'appareil devient alors volumineux et intransportable en pratique ; il reste donc immobile et chaque élément de combustible est apporté devant lui. Cela oblige à sortir chaque élément (en général, un faisceau d'aiguilles très longues) de l'alvéole dans lequel il est entreposé, et de le faire passer devant l'appareil avant de le remettre à sa place. Ces longues manipulations rendent les campagnes de mesures fastidieuses, accroissent le temps d'inactivité du réacteur et risquent de détériorer les éléments. On ne peut accepter de procéder ainsi pour discriminer du combustible, où on craint surtout des substitutions par malveillance, notamment pour dérober du plutonium, et où l'auteur de la substitution peut être habile et vouloir cacher son acte en remplaçant le combustible par un autre aux propriétés d'émission peu différentes, ou seulement quelques aiguilles de l'assemblage. Les mesures doivent être précises et menées avec soin, ce qui impose de prendre du temps pour s'assurer des bonnes conditions opératoires ou pour prendre des mesures supplémentaires par précaution. On veut donc se dispenser de manoeuvrer longuement les éléments de combustible et se contenter de les sortir partiellement de leurs alvéoles, en transportant l'appareil devant chaque élément.

On doit souligner que la méthode aux neutrons actifs est insensible à la composition du combustible, mais qu'elle ne renseigne pas sur cette composition et qu'elle remplace la méthode de mesure des neutrons émis en fournissant le même résultat.

Le document US-A-4 510 117 décrit un dispositif pour mesurer le taux d'irradiation, in-situ, d'assemblages de combustible nucléaire irradiés.

Il convient donc de satisfaire au besoin de mesures assez rapides pour discriminer le combustible au moyen d'un appareil mobile, sans oublier que l'appareil et le combustible restent immergés et qu'il est donc difficile de s'assurer de la position précise de celui-là. Une solution est proposée avec l'appareil sujet de l'invention.

Le procédé proposé diffère de celui de l'appareil antérieur en ce qu'il est fondé sur la corrélation des deux mesures de rayonnements pour obtenir un autre résultat. Il s'agit d'un procédé de discrimination de combustibles nucléaires d'après leurs compositions, caractérisé en ce qu'il consiste à mesurer deux rayonnements émis par le combustible, à déduire un taux de combustion du combustible à partir de la valeur mesurée d'un des rayonnements en supposant que le combustible est d'une composition (initiale) déterminée, à estimer une valeur d'émission de l'autre des rayonnements en fonction de la composition supposée et du taux de combustion déduit du combustible, à comparer cette valeur estimée d'émission à la valeur mesurée de l'autre des rayonnements, à conclure que la composition supposée du combustible est la composition (initiale) réelle si les valeurs composées sont proches, et que le combustible a une autre composition sinon.

Dans le cas principalement envisagé, un des rayonnements est neutronique et l'autre des rayonnements est un rayonnement gamma sur une bande d'énergie d'émission d'au moins un élément radioactif à vie longue.

En effet, si le rayonnement gamma varie de la même façon pour les deux compositions de combustible en fonction du taux de combustion, le rayonnement neutronique est toujours plus important pour le combustible mixte à mesure qu'augmente le taux de combustion. Le rayonnement neutronique mesuré peut donc être associé à des taux de combustion bien différents selon la composition de combustible, qu'on peut corréler à des activités de rayonnement gamma bien différentes, à l'une desquelles on peut associer l'activité gamma mesurée par l'autre capteur pour en déduire la composition. On doit cependant écarter la contribution des éléments radioactifs à vie courte, qui dépend du temps de refroidissement du combustible et de la dernière puissance d'irradiation, c'est-à-dire de paramètres tout différents.

Le dispositif préféré pour conduire ces mesures et ce procédé comprend, outre les détecteurs des deux rayonnements et un boîtier les contenant, des moyens d'accrochage du boîtier à une perche de descente vers le combustible, entreposé dans des alvéoles de stockage immergés en piscine, et des moyens de placement du boîtier à une position définie sur au moins un des alvéoles, voisin de l'alvéole contenant le combustible qui sera objet de l'inspection. Un tel appareil peut être placé à une position bien définie sur la structure d'entreposage du combustible, sans qu'on ait à craindre une erreur de position ou un déplacement intempestif, après quoi il suffit de sortir légèrement le combustible de l'alvéole voisin pour le mettre à hauteur des détecteurs et pouvoir procéder à l'inspection. Le dispositif peut ensuite être transporté vers une autre zone de combustible en déplaçant la perche.

Ces aspects de l'invention ainsi que d'autres seront maintenant décrits au moyen des figures suivantes :
- la figure 1 est une coupe longitudinale de l'appareil dans son environnement ;
- la figure 2 est une coupe transversale de l'appareil ;
- les figures 3 et 4 sont deux coupes longitudinales, agrandies, de l'appareil ;
- la figure 5 est un graphe d'explication du procédé ;
- et les figures 6 et 7 illustrent deux perfectionnements possibles de l'appareil.

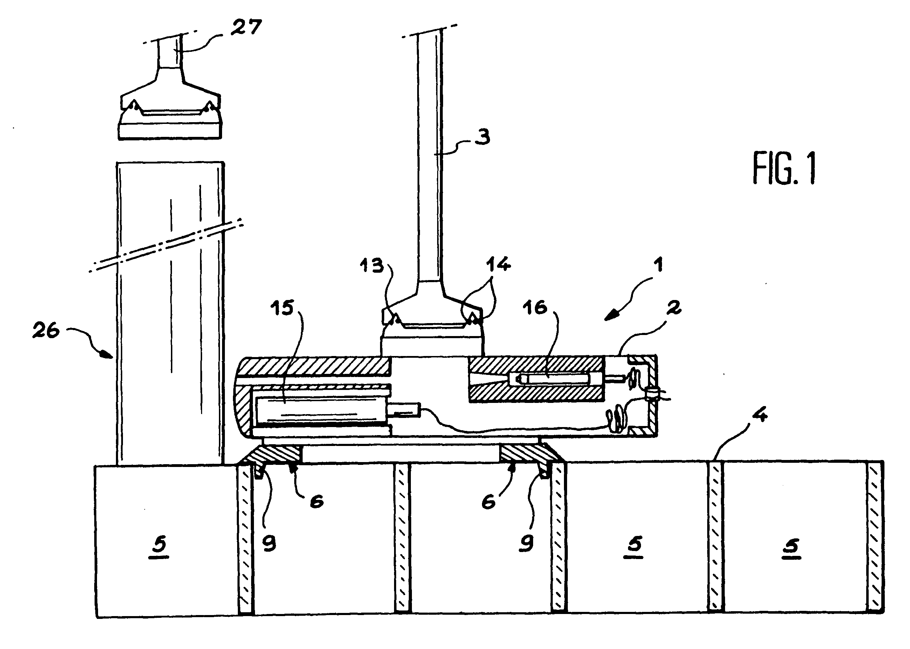

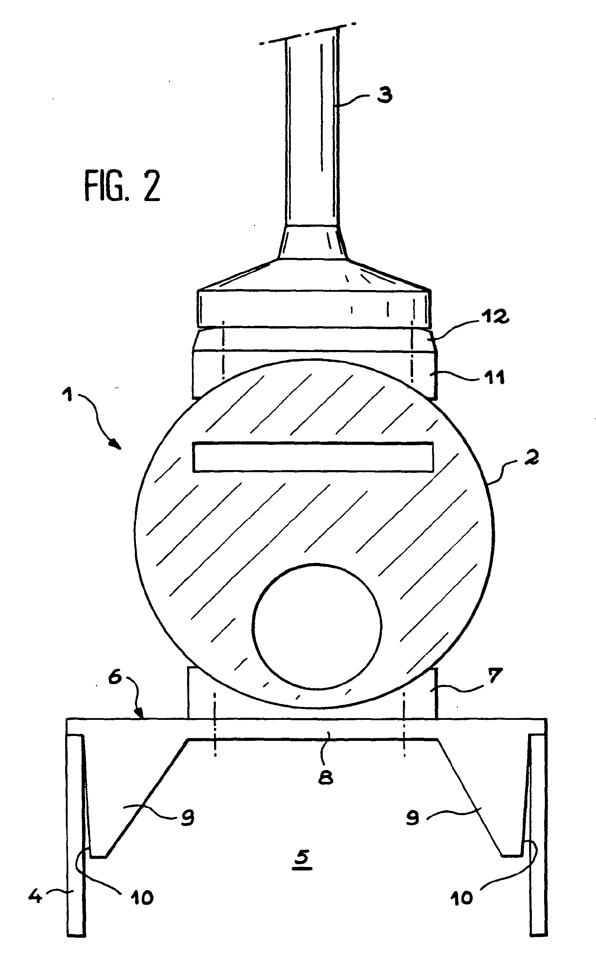

Ainsi que le montre la figure 1, l'appareil, portant la référence 1, est immergé dans une piscine de refroidissement de combustible ; il comprend un boîtier 2 de forme généralement cylindrique, suspendu à une perche de manipulation 3 appartenant à un système déjà existant de l'installation et qui est mobile horizontalement et verticalement. L'appareil 1 peut donc être posé sur une structure 4 d'alvéoles 5 carrés ou hexagonaux de stockage de combustible nucléaire. Comme on le voit aussi à l'aide de la figure 2, le système de placement de l'appareil 1 sur la structure 4 comprend deux tenons 6 placés symétriquement à l'avant et l'arrière du boîtier 1 et vissés à une base 7 commune soudée au fond du boîtier 2 ; les tenons 6 comprennent une platine 8 et, latéralement, deux picots 9 engagés chacun sur un coin d'alvéole 5 et pénétrant dans celui-ci ; les bords externes, tournés vers la structure 4, des picots 9 sont en dépouille de manière à leur permettre d'être introduits sans difficulté dans les alvéoles 5 par un mouvement de descente de la perche 3, puis d'ajuster la position de l'appareil 1 quand ils touchent la structure 4.

Une disposition analogue peut être retenue pour réaliser les moyens d'accrochage de l'appareil 1 à la perche 3 : une base 11 est soudée au sommet du boîtier 2, et une pièce de préhension 12 lui est vissée ; elle porte des prises 13 que saisissent des doigts de préhension 14 mobiles de la perche 3, ce qui permet de retenir fermement l'appareil 1. On aura compris que la pièce de préhension 12 et les tenons 6 sont vissés pour être remplacés par des pièces de forme analogue si l'appareil 1 doit servir avec une autre perche 3 ou une autre structure 4 sur laquelle il doit être posé.

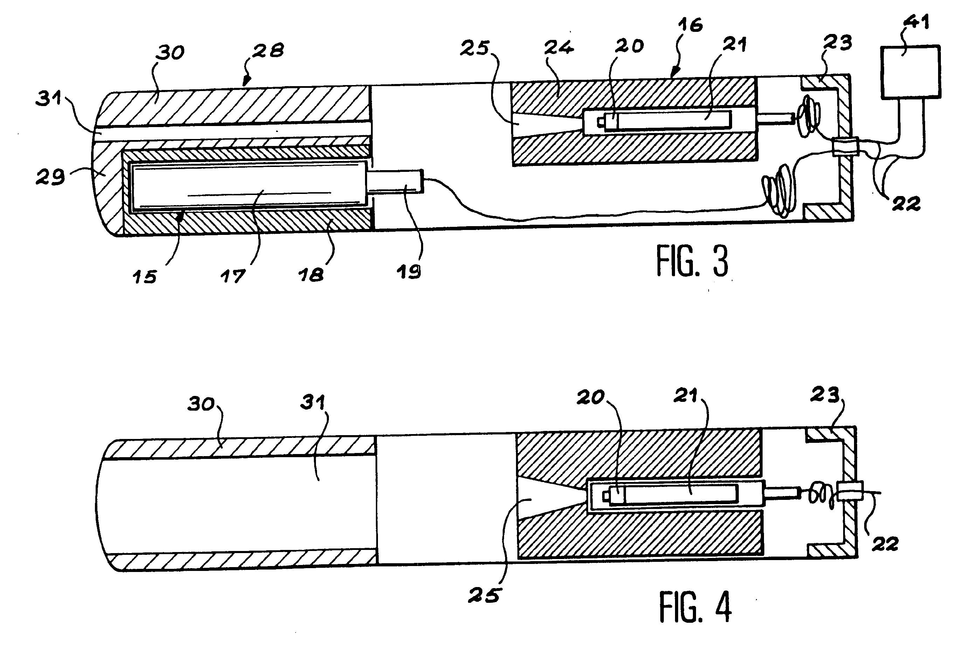

Le boîtier 1 comprend (voir aussi les figures 3 et 4) un détecteur de neutrons 15 et un détecteur de rayonnement gamma 16 enfermés dans le boîtier 2. Le détecteur de neutrons 15 est composé d'une chambre de fission 17 qui convertit les neutrons en impulsions électriques, d'un bloc de thermalisation 18 qui ralentit les neutrons avant de les laisser atteindre la chambre de fission 17 et entoure donc celle-ci, et d'un connecteur électrique 19 joint à la chambre de fission 17. Le détecteur de rayonnement gamma 16 comprend un cristal 20 de résolution étroite, ce qui signifie qu'il n'est sensible qu'aux photons d'un niveau d'énergie bien défini. Il peut s'agit d'un cristal de CdZnTe, sensible seulement aux photons émis par les isotopes du césium (134 Cs, 137 Cs) ; le détecteur 16 comprend encore un connecteur électrique 21 joint au cristal 20. Les connecteurs 19 et 21 transmettent les signaux électriques par l'intermédiaire de fils 22 à une installation de mesure 41 située à l'écart de la piscine qui évalue les rayonnements reçus et permet de déduire les débits de rayonnements provenant du combustible, voire d'appliquer automatiquement le procédé décrit plus loin. Ces fils 22 traversent un bouchon étanche 23 fermant le boîtier 2 à l'arrière. Un blindage 24 en plomb ou alliage de tungstène entoure le reste du détecteur de rayonnement gamma 16 et comprend une ouverture de collimation, formant un collimateur arrière, 25. Cette ouverture est conoïde, c'est-à-dire en forme de cône à base elliptique dont le plus grand axe d'ellipse s'étend en direction horizontale ou en direction de la largeur d'un assemblage 26 d'aiguilles de combustible nucléaire à examiner par l'appareil 1 ; cet assemblage 26 est représenté en position d'examen, partiellement extrait d'un alvéole 5 voisin de ceux sur lesquels l'appareil 1 est retenu. Une perche 27, analogue à la perche 3, est utilisée pour réaliser cette extraction.

Le boîtier 2 est occupé à l'avant par un bouclier 28 en plomb de forme particulière en raison du rayonnement gamma, que les assemblages 26 émettent généralement à une intensité beaucoup plus grande que l'autre. Il comprend une partie fine 29, continue et placée devant le détecteur de neutrons 15, et une partie épaisse 30 percée d'une fente 31, formant un collimateur avant, devant le détecteur de rayonnement gamma 16 qui, comme on le voit, est placé derrière le détecteur de neutrons 15 mais à un niveau supérieur afin de ne pas être gêné par lui. Dans ces conditions, la partie fine 29 du bouclier 28 protège le détecteur de neutrons 15 des photons gamma et la fente 31, qui s'étend sur toute la largeur de l'assemblage combustible 26 mais est très fine dans l'autre direction, et ne laisse passer qu'une faible portion du rayonnement vers le détecteur de rayonnement gamma 16, qui n'est donc pas saturé ; et le détecteur de neutrons 15 est protégé des photons arrivant du sommet de l'assemblage 26 par la partie épaisse 30, qui le couvre. L'ouverture 25 de collimation arrière a pour fonction d'arrêter encore une partie du rayonnement qui arrive jusqu'à lui, mais doit tout de même avoir une surface d'ouverture suffisante au fond pour que tout le cristal 20 soit exposé au rayonnement. Le détecteur de rayonnement gamma 16 peut coulisser en frottant dans le boîtier 2, ce qui permet d'ajuster sa position axiale et de régler la collimation globale. Il peut être guidé par des rails non représentés.

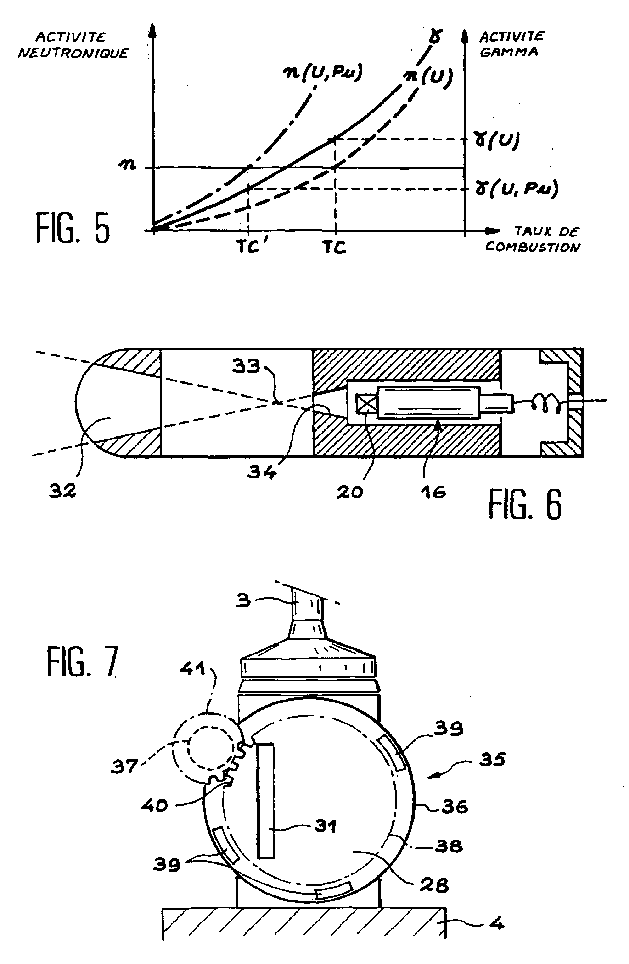

L'appareil 1 tel qu'il est représenté à la figure 1 est prêt à fonctionner, et la figure 5 permettra de saisir immédiatement le principe d'une mesure : le compte des neutrons reçus par le détecteur 15 est un nombre n ; les courbes d'activités neutroniques d'un assemblage d'oxyde d'uranium et d'un assemblage mixte d'oxydes d'uranium et de plutonium en fonction du taux de combustion, ou de l'irradiation de l'assemblage, sont données par les courbes n (U) et n(U,Pu). Si on suppose que le combustible est de l'oxyde d'uranium pur, on déduira que le taux de combustion est TC ; on s'attendra alors à mesurer une activité γ(U) à l'aide d'une courbe γ donnant l'activité en fonction du taux de combustion (cette courbe est valable pour les deux compositions de combustible). Si l'activité mesurée par le détecteur 16 est proche de cette valeur, l'hypothèse de départ sera vérifiée : le combustible est bien de l'oxyde d'uranium pur. Sinon, il s'agira du mélange d'oxydes. On peut bien entendu faire une autre vérification et estimer aussi le taux de combustion TC' pour lequel le combustible mixte donnerait l'activité neutronique n mesurée, puis en déduire l'activité γ(U,Pu) qu'on devrait alors obtenir et vérifier si cette valeur correspond à celle qu'on mesure effectivement. Il est manifeste que ce procédé peut être appliqué à la discrimination de plus de deux compositions de combustibles nucléaires si on le souhaite, et même si leurs courbes de rayonnement gamma sont différentes.

Deux autres perfectionnement possibles seront donnés sur les figures 6 et 7. Si le rayonnement gamma reçu par le détecteur 16 doit être plus réduit que pour la solution représentée ci-dessus, on peut changer le système de collimation et remplacer la fente 31 du blindage 29 par une fente 32 en éventail, s'ouvrant vers l'assemblage 26 de combustible en direction de sa largeur (la direction verticale sur la figure 6). La hauteur de la fente 32 est identique à celle de la fente 31. Le rayonnement collimaté converge vers un foyer 33 qui peut être placé derrière ou devant le détecteur de rayonnement gamma 16 ; l'ouverture du collimateur arrière, ici associée à la référence 34, est d'un angle identique à celui de la fente avant 32, et si le collimateur arrière est placé derrière le foyer 33, l'ouverture 34 s'ouvre vers le cristal 20. Cette construction permet de réduire la quantité de rayonnement captée par le cristal 20 tout en conservant l'avantage que la fente 34 s'ouvre sur toute la surface du cristal 20, et la fente 32 sur toute la largeur de l'assemblage 26.

Le procédé et l'appareil tel qu'ils ont été expliqués jusqu'ici sont surtout efficaces pour vérifier l'ensemble de l'assemblage 26, mais on pourra envisager d'avoir à affronter une substitution, plus difficile à détecter, de certaines des aiguilles seulement de cet assemblage. Un procédé permettant d'obtenir une image individuelle des aiguilles de combustible consisterait à faire tourner l'appareil 1 autour de l'assemblage 26, à l'arrêter à certains emplacements déterminés et à prendre les mesures de l'activité de l'assemblage 26 à chacun de ces emplacements, avant de calculer la contribution de chacune des aiguilles en appliquant un calcul d'inversion d'un système matriciel tenant compte de l'éloignement des aiguilles pour chaque mesure. De tels procédés tomographiques sont cependant couramment utilisés, y compris dans le domaine nucléaire, si bien qu'il est inutile d'en détailler des exemples.

Une autre façon de procéder consisterait à consacrer la mesure à une seule aiguille ou à un petit nombre d'aiguilles. On pourrait alors adopter le système de la figure 7, où le boîtier 2 est remplacé par un boîtier composite 35 formé de deux enveloppes concentriques, une enveloppe externe 36 porteuse des moyens d'accrochage à la perche 3 et de placement sur la structure 4, ainsi que d'un moteur 37, et une enveloppe interne 38 porteuse des détecteurs 15 et 16 et du bouclier 28. Les enveloppes 36 et 38 seraient mobiles l'une par rapport à l'autre grâce à des paliers 39 intermédiaires, disposés sur deux cercles, près des extrémités de l'appareil 1. L'enveloppe interne 38 serait munie d'une couronne dentée 40 qui engrènerait avec un pignon de sortie 41 du moteur 37 afin que ce dernier puisse faire tourner l'enveloppe interne 38 : on pourrait alors placer la fente 31 (ou 32) verticalement, dans la direction d'allongement des aiguilles de combustible, de sorte que le rayonnement gamma mesuré ne proviendrait que d'une aiguille unique ou d'un petit nombre d'aiguilles situées dans le prolongement de la fente. Le moteur 37 serait commandé de l'extérieur, par une télécommande ou par des fils non représentés. On pourrait envisager aussi de prévoir des butées pour arrêter le déplacement de l'enveloppe interne 38 à une position de fente 31 verticale et une position de fente 31 horizontale, et donc limiter son mouvement à un quart de tour ; une limitation du mouvement à un demi-tour serait aussi à envisager, pour placer la fente 31 à deux positions verticales différentes sans avoir à déplacer l'appareil 1, ce qui est possible puisque la fente 31 ne passe pas par le centre des boîtiers 36 et 38.

## Revendications

1. Procédé de discrimination de combustibles nucléaires d'après leurs compositions, **caractérisé en ce qu'**il consiste à mesurer deux rayonnements émis par le combustible, à déduire un taux de combustion (TC) du combustible à partir de la valeur mesurée (n) d'un des rayonnements en supposant que le combustible est d'une composition déterminée, à estimer une valeur d'émission de l'autre des rayonnements en fonction de la composition supposée et du taux de combustion déduit du combustible, à comparer cette valeur estimée d'émission à la valeur mesurée (γ) de l'autre des rayonnements, à conclure que la composition supposée du combustible est la composition réelle si les valeurs composées sont proches, et, sinon, que le combustible a une autre composition.

2. Procédé de discrimination suivant la revendication 1, **caractérisé en ce qu'**un des rayonnements est neutronique et l'autre des rayonnements est un rayonnement gamma sur une bande d'énergie d'émission d'au moins un élément radioactif à vie longue.

3. Dispositif de discrimination de combustibles nucléaires présents dans une installation comprenant une structure sous-jacente à alvéoles d'entreposage immergée dans une piscine, comprenant un premier détecteur (15) d'un premier rayonnement, un second détecteur (16) d'un second rayonnement, un boîtier (2) étanche contenant les détecteurs, **caractérisé en ce qu'**il contient des moyens d'accrochage du boîtier (13, 14) à une perche (3) de descente vers le combustible et des moyens de placement (6, 9) du boîtier à une position déterminée sur au moins un des alvéoles (5), voisin d'un alvéole contenant le combustible nucléaire (26) objet de la discrimination.

4. Dispositif de discrimination de combustibles nucléaires suivant la revendication 3, **caractérisé en ce que** l'un des détecteurs est un détecteur de rayonnement gamma placé derrière deux collimateurs en prolongement (25, 31; 32, 34), dont un collimateur arrière, situé juste devant ledit détecteur et s'ouvrant sur toute une surface de détection d'un corps de détection, et un collimateur avant, à section en fente allongée en direction transversale d'un élément du combustible.

5. Dispositif de discrimination de combustibles suivant la revendication 4, **caractérisé en ce que** le boîtier comprend une partie fixe (36), portant les moyens d'accrochage, et une partie mobile (38) pivotant sur la partie fixe de façon à faire tourner la fente d'un quart de tour ou d'un demi-tour.

6. Dispositif de discrimination de combustible nucléaire suivant l'une quelconque des revendications 4 ou 5, **caractérisé en ce que** la fente a une dimension d'allongement variable et s'évase vers l'élément de combustible.

## Claims

1. Process for discriminating nuclear fuels from their composition, **characterised in that** it consists in measuring two types of radiation emitted by the fuel, deducing the level of burn-up (TC) of the fuel from the measured value (n) of one of the types of radiation by assuming that the fuel has a defined composition, estimating an emission value for the other type of radiation as a function of the assumed composition and the level of deduced burn-up of the fuel, comparing this estimated emission value with the measured value (γ) of the other type of radiation, and concluding that the assumed composition of the fuel is the real composition if the values composed are similar, and that, if not, the fuel has another composition.

2. Process for discriminating nuclear fuels according to claim 1, **characterised in that** one of the types of radiation is neutron radiation and the other type of radiation is gamma radiation rover an emission energy range of at Least one long life radioactive element.

3. Device for discriminating nuclear fuels in an installation, comprising a subjacent structure with storage cells immersed in a water filled bay, the device comprising a first detector (15) of a first type of radiation, a second detector (16) of a second type of radiation, a waterproof casing (2) containing the detectors, whereby it contains means of attaching the casing (13, 14) to a boom (3) that descends towards the fuel, and means of placing (6, 9) the casing in a given position on at least one of the cells (5) adjoining a cell containing the nuclear fuel (26) that is the subject of the discrimination.

4. Device for discriminating nuclear fuels according to claim 3, whereby one of the detectors is a gamma radiation detector located behind two collimators in continuation (25, 31; 32, 34), comprising a rear collimator, located just in front of the said detector and opening up onto the whole detection area of a detection body, and a front collimator, with a slot section extended in the transversal direction of a fuel element.

5. Device for discriminating nuclear fuels according to claim 4, whereby the casing comprises a fixed part (36) bearing the means of attaching and a mobile part (38) that pivots around the fixed part in such a way as to turn the slot a quarter turn or a half turn.

6. Device for discriminating nuclear fuels according to either claim 4 or claim 5, whereby the slot has a variable extension dimension and broadens out towards the fuel element.

## Patentansprüche

1. Verfahren zur Unterscheidung von Kernbrennstoffen nach ihren Zusammensetzungen,
**dadurch gekennzeichnet, dass** es darin besteht, zwei durch den Brennstoff emittierte Strahlungen zu messen, einen Abbrand (TC) des Brennstoffs von dem gemessenen Wert (n) einer der Strahlungen abzuleiten, davon ausgehend, dass der Brennstoff eine bestimmte Zusammensetzung aufweist, einen Emissionswert der anderen Strahlung in Abhängigkeit von der angenommenen Zusammensetzung und dem abgeleiteten Abbrand des Brennstoffs zu schätzen, diesen geschätzten Emissionswert zu vergleichen mit dem gemessenen Wert (γ) der anderen Strahlung und daraus zu schließen, dass die angenommene Zusammensetzung des Brennstoffs die tatsächliche Zusammensetzung ist, falls die zusammengesetzten Werte nahe beieinander liegen, und falls nicht, dass der Brennstoff eine andere Zusammensetzung hat.

2. Unterscheidungsverfahren nach Anspruch 1, **dadurch gekennzeichnet, dass** die eine der Strahlungen eine Neutronenstrahlung ist und die andere Strahlung eine Gammastrahlung in einem Emissionsenergieband wenigstens eines langlebigen radioaktiven Elementes ist.

3. Vorrichtung zur Unterscheidung von Kernbrennstoffen, die präsent sind in einer darunterliegenden, in ein Becken eingetauchten Zwischenlagerungszellenstruktur, umfassend einen ersten Detektor (15) einer ersten Strahlung, einen zweiten Detektor (16) einer zweiten Strahlung und ein die Detektoren enthaltendes dichtes Gehäuse (2), **dadurch gekennzeichet, dass** es Aufhängeinrichtungen (13, 14) des Gehäuses an einer Stange (3) zur Absenkung in Richtung Brennstoff und Einrichtungen (6, 9) zur Platzierung in einer bestimmten Position auf wenigstens einer der Zellen (5) in der Nähe einer den Kernbrennstoff (26) enthaltenden Zelle ist, der Gegenstand der Unterscheidung ist.

4. Vorrichtung zur Unterscheidung von Kernbrennstoffen nach Anspruch 3, **dadurch gekennzeichnet, dass** einer der Detektoren ein Gammastrahlungsdetektor ist, platziert hinter zwei Kollimatoren in Verlängerungsanordnung (25, 31; 32, 34), nämlich einem hinteren Kollimator, der sich direkt vor dem genannten Detektor befindet und sich über eine gesamte Detektionsfläche eines Detektionskörpers öffnet, und einem vorderen
Kollimator mit einem sich in transversaler Richtung zu einem Brennstoffelement bzw. Brennelement erstreckenden schlitzförmigen Querschnitt.

5. Vorrichtung zur Unterscheidung von Kernbrennstoffen nach Anspruch 4, **dadurch gekennzeichnet, dass** das Gehäuse einen die Aufhängeinrichtungen umfassenden festen Teil (36) und einen beweglichen Teil (38) umfasst, der in dem festen Teil so schwenkbar ist, dass der Schlitz um eine Vierteldrehung oder eine Halbdrehung gedreht werden kann.

6. Vorrichtung zur Unterscheidung von Kernbrennstoffen nach einem der Ansprüche 4 oder 5, **dadurch gekennzeichnet, dass** die Längsausdehnung des Schlitzes variabel ist und sich in Richtung des Brennelements erweitert.
